# EUROPEAN PATENT SPECIFICATION

(11) **EP 0 789 846 B1**
(45) Date of publication and mention of the grant of the patent: **24.02.1999**
(21) Application number: 95935873.0
(22) Date of filing: 06.11.1995
(51) Int. Cl.: G01S 3/786

(54) **A METHOD IN AN IMAGE RECORDING SYSTEM**
VERFAHREN IN EINEM BILDAUFNAHMESYSTEM
PROCEDE RELATIF A UN SYSTEME D'ENREGISTREMENT D'IMAGES

(30) Priority: 04.11.1994 DK 127494; 05.09.1995 DK 97295
(43) Date of publication of application: 20.08.1997
(73) Proprietor: Telemedia A/S, 9220 Aalborg Ost (DK)
(72) Inventor: HEDER, Thomas, DK-9000 Aalborg (DK); DUE, Jesper, DK-9000 Aalborg (DK); NIELSEN, Niels, P., Heeser, DK-9000 Aalborg (DK); JÜRGENSEN, Peter, DK-9220 Aalborg Ost (DK)
(74) Representative: Wittrup, Flemming
(86) International application number: DK9500441
(87) International publication number: WO9614587

(56) References cited:
- WO-A-94/17636
- US-A- 4 839 824
- US-A- 4 849 906
- PROCEEDINGS OF THE INTERNATIONAL CONFERENCE ON INDUSTRIAL ELECTRONIC CONTROL AND INSTRUMENTATION BOLOGNA, Sept. 5-9, 1994, MAKI TANAKA et al., "3-D Tracking of a Moving Object by an Active Stereo Vision System", p. 816-820.
- 1991, IEEE COMPUTER SOCIETY CONFERENCE ON COMPUTER VISION AND PATTERN RECOGNITION, LAHAINA, MAUI, HAWAII, June 3-6, 1991, M.R.M. JENKIN et al., "Using Stereomotion to Track Binocular Targets", p. 96-102.
- PATENT ABSTRACTS OF JAPAN, Vol. 18, No. 172, P-1715; & JP,A,05 334 572 (FUJI ELECTRIC CO LTD), 17 December 1993.

## Description

The invention concerns a method in an image recording system for extracting detailed images of an arbitrary section of a scene.

Usually, both moving objects and stationary objects are present in a scene. In image reproduction of such a scene it is important to be able to track the moving objects, and in case of several moving objects then to be able to track a specific object.

In the classic image reproduction technique a moving object is tracked in a scene simply by manually moving a camera toward the moving object and then tracking the object in the scene.

More recent techniques employ automatic systems for tracking specific moving objects in a scene. Thus, the published PCT Application No. WO 94/17636 discloses a video system consisting of a movable camera with automatic focusing and a static camera. The movable camera is controlled by means of two-dimensional information from the static camera. Thus, the system has no three-dimensional information, which means that the physical size of the object and the distance to the camera cannot be determined. This, in turn, has the consequence that the image variation caused by the object during motion must be significantly slower than the autofocusing time for the autofocusing system to be stable. Furthermore, the system cannot handle more than one person in the scene.

Further, US Patent Specification No. 4928175 discloses a camera system for three-dimensional determination of objects. Images of an object are recorded by means of the two cameras, and any point in an x,y,z system of coordinates may be determined on the basis of this. Thus, no image of a scene is recorded. The patent discloses a method of optimizing all parameters in a specific calibration model implemented in one algorithm. The invention finds particular use for the calibration of measuring systems.

Accordingly, the object of the invention is to provide a system of the type mentioned in the opening paragraph which is capable of automatically tracking moving objects in a scene and locking to an object without suddenly loosing the object in the field of vision of the movable camera, in a fast and simple manner.

The object of the invention is achieved by a method of the type defined in the introductory portion of claim 1 and characterized in that the dynamic objects in the scene are determined by means of three-dimensional measurements performed by comparing registered images of fixed sensors with partly overlapping field of vision, and that the dynamic objects are tracked by at least one movable unit which is controlled on the basis of the image data of the fixed sensors.

It is hereby ensured that the image recording system provided is capable of computing an accurate three-dimensional estimate of the positions of fixed as well as dynamic objects in the scene with respect to the sensor system as a function of time.

When, as stated in claim 2, several pairs of sensors are used to provide several pairs of video vision for the determination of the three-dimensional information, the system can cover larger areas, and the accuracy of the three-dimensional position estimate can be improved.

When the sensors have parallel optical axes, the calibration of the system is less complicated, while obtaining a good precision with a simpler algorithm comprising fewer computation parameters.

Expediently, CCD arrays may be used as sensors, said arrays being extremely suitable for the generation of image information for data processing purposes.

When the movable unit can pan, tilt, zoom and focus, the moving object may be tracked in all directions, while enabling zooming or focusing of the object or a particular portion thereof.

When, as stated in claim 7, a user-controlled control unit is provided, capable of selecting one of the dynamic objects to be tracked by a movable unit, great flexibility is imparted to the system, since even complicated scenes with several local moving objects may easily be controlled.

To obtain improved imaging in the fixed sensors and thus improve the data basis for the subsequent image processing procedures, it is an advantage that the scene is illuminated by a light source from the same approximate point of vision as the fixed sensors.

It is hereby ensured that shadows caused by other sources of light are suppressed. Shadows caused by the light source positioned at the sensor, will not be visible to the sensors, since they are concealed behind the object.

As stated in claim 10, it is possible to use an IR light source, which has the advantage that it is not visible.

Finally, as stated in claim 11, it is an advantage that a high-pass filter or a band-pass filter is arranged in the optoelectronic system. It is hereby ensured that just a spectral section of light is included in the sensor exposure. For the light source placed at the sensor to be used optimally, an optical filter having a spectral characteristic as coincident with that of the light source as possible, is selected. To obtain the greatest possible suppression of the undesired light sources, the light source and the filter are positioned in a spectral range where the undesired light sources emit as little light as possible.

The invention will now be explained more fully with reference to an example shown in the drawing, in which
fig. 1 shows a basic setup of an image recording system for use in the method of the invention,
fig. 2 is a view of the basic components incorporated in the image recording system,
fig. 3 shows a block diagram of the image recording system,
fig. 4 shows how a light source is positioned in connection with the image recording system of the invention,
Fig. 5 shows a typical spectral response distribution for a CCD camera without an IR filter,
fig. 6 shows the spectral distribution for an IR light source, and an example of the spectral distribution of the sunlight at the surface of the sea, as well as the characteristic of a high-pass filter, while
fig. 7 is a similar view, using a band-pass filter.

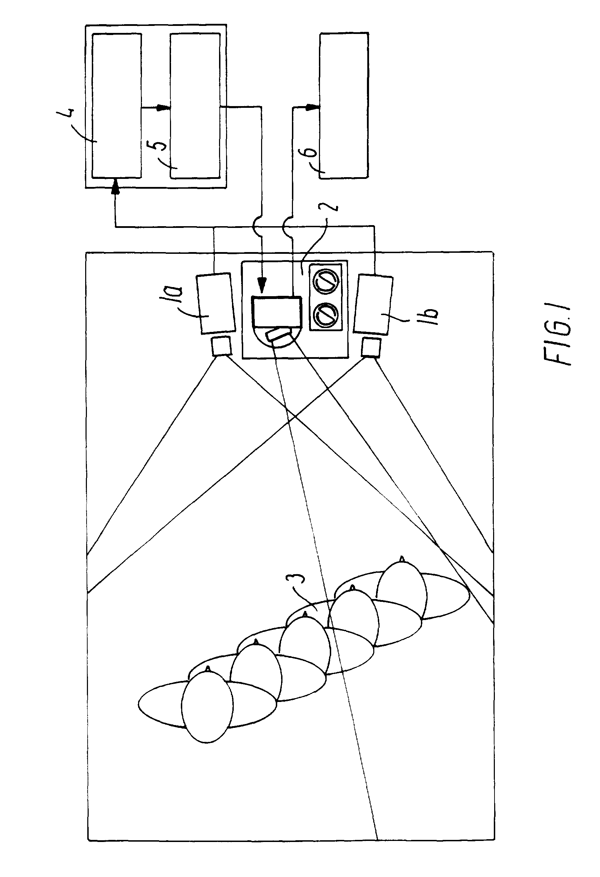

As will be seen in fig. 1, the image recording system of the invention consists of a movable camera 2 capable of panning, tilting, zooming and focusing (i.e. rotating vertically and horizontally and taking close-ups). The camera 2 receives control signals from a camera control unit 5, whose signals are computed on the basis of data from two fixed sensors, such as registration by cameras 1a, 1b of image information from a scene 3. A three-dimensional interpreter 4 computes the three-dimensional position of the object on the basis of the image information from the cameras 1a, 1b. Further, an external system 6, such as a recorder, may be connected to the camera 2.

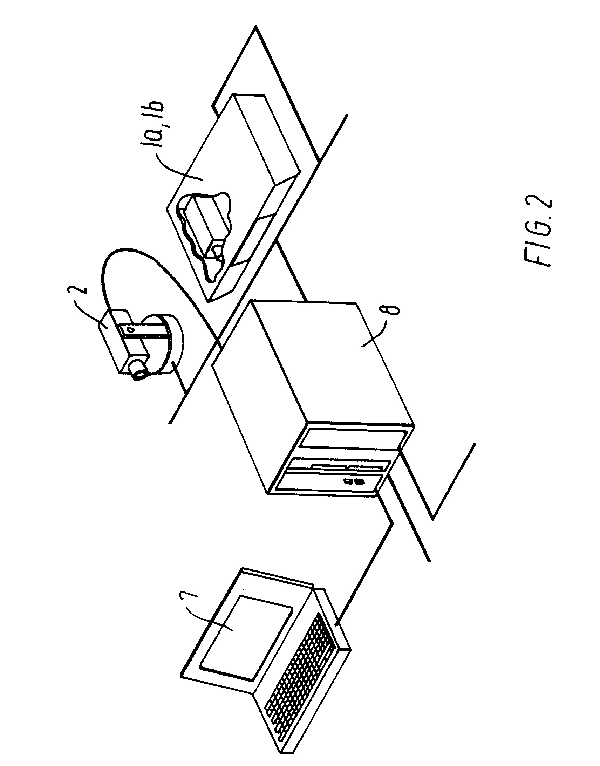

As will be seen in fig. 2, it is possible to control the entire system by means of a user unit, such as a PC, which may be used for introducing special commands, as will be described more fully below. Additionally, a central main system 8 may be provided, which, in addition to being connectible to e.g. a recorder, may communicate with e.g. local and public networks.

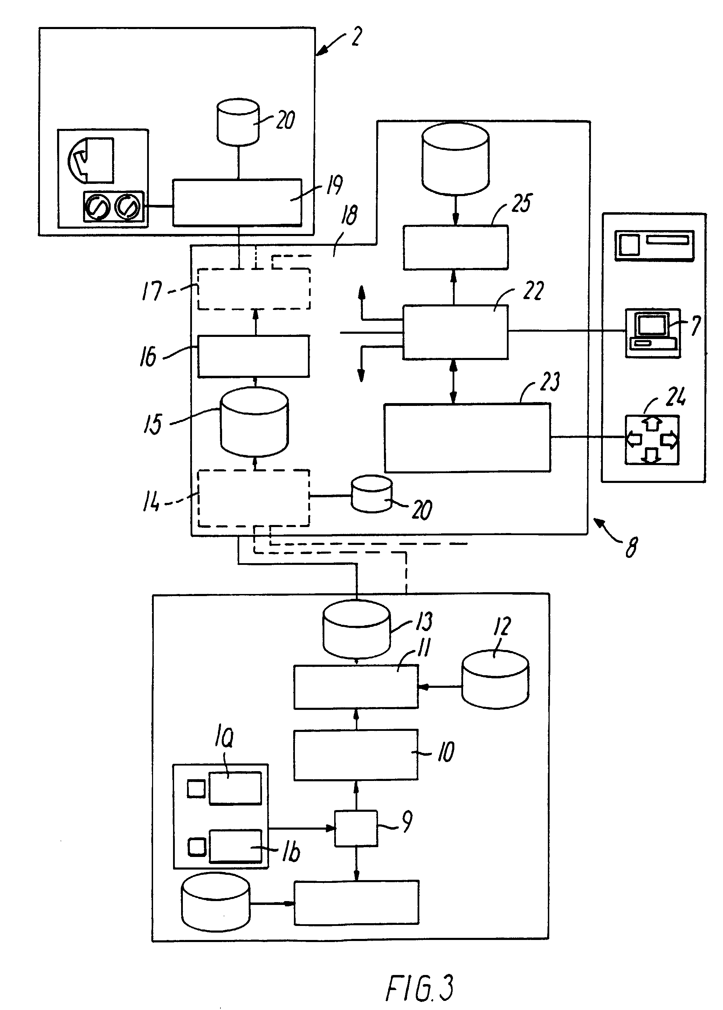

As will be seen in fig. 3, which shows a more detailed system diagram of the image recording system of the invention, image data arriving from the cameras 1a, 1b are A/D converted, and data are passed further on to a unit 10 which segments the dynamic objects detected by the cameras la, 1b and controls the objects as a function of time. The dynamic objects may be determined by comparing image date for each of the cameras 1a, 1b. Further, three-dimensional position data may be extracted from these image date in a unit 11, and these position data may be supplied to calibration data which, together with the three-dimensional position data, generate a complete three-dimensional model 13 of a scene.

Three-dimensional positions from several static detection units are transformed in an object correspondence process 14 by an ordinary geometrical transformation to a common system of coordinates. Then, a complete three-dimensional scene model 15 comprising all the detected objects is provided.

Furthermore, the unit 16 may accommodate an object priority facility which is expedient in scenes including several moving objects. The unit 16 may e.g. be used for prioritizing moving objects. The prioritization may be based on predefined priority criteria. These may e.g. comprise the position of the object in the scene, the speed of the object, physical dimensions, colour composition or combinations of these. Where several cameras are used, a unit 17 may be employed for controlling prioritized activation of the various cameras. Control data are generated in the unit 19 for the camera 2 on the basis of partly three-dimensional transformation data from the unit 20 and partly three-dimensional position data from the unit 17. The camera 2 may hereby be caused to pan, tilt, zoom and focus.

The right side of fig. 3 shows a block diagram of a possible user face for the recording system of the invention. As will be seen, it may consist of a unit 7 which may be a PC controlling a technical setup 22, which may e.g. communicate with an alarm trigger 25 or with a communication interface for transmission of images via a unit 23. The communication connections from the unit 23 may communicate with a remote control 24 from which the system may be controlled.

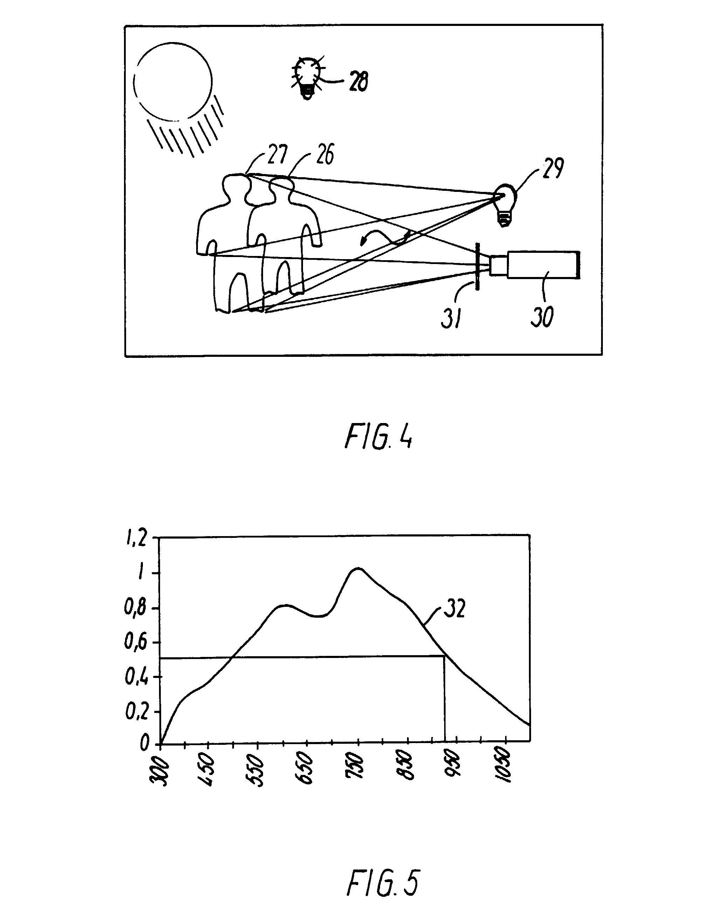

Fig. 4 shows a system sketch where a movable object is designated 26, and 27 is the shadow of the object which occurs because of the light source 29. 30 is the stationary unit, e.g. as shown in fig. 3, la, 1b. Further, the system sketch shows a lamp 28 and sunlight which illuminate the scene. A filter 31 is arranged in front of the fixed unit 30. As will be explained more fully below in connection with figs. 5 to 7, the setup shown in fig. 4 ensures that very accurate data of the scene are provided, as regards both movable objects and fixed objects, a light source 29, which may e.g. be an IR light source, being arranged adjacent the fixed unit 30, whereby the shadow from the object 26 is "concealed" behind the object 26. As will be seen, also a filter 31 is arranged in front of the camera, thereby additionally ensuring that undesirable light is not captured by the fixed unit 30.

Fig. 5 shows an example of a spectral distribution for a CCD camera which may be used in connection with the image recording system of the invention, i.e. a CCD camera that may be incorporated as the cameras 1a, 1b in fig. 2.

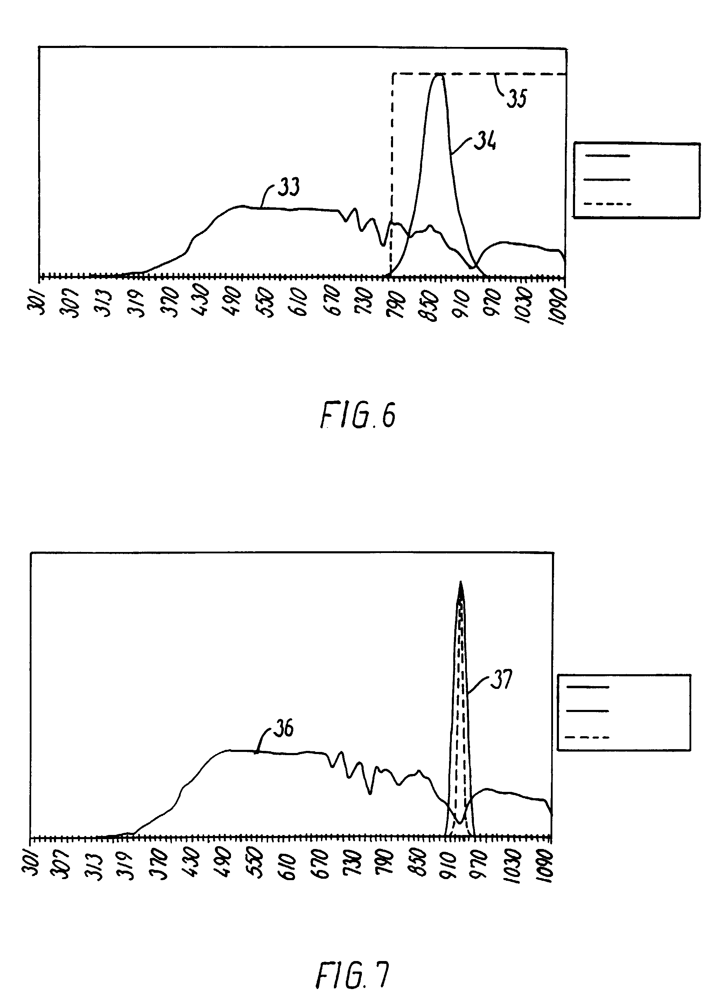

The numeral 33 in fig. 6 and the numeral 36 in fig. 7 represent an example of a spectral distribution of sunlight at the surface of the sea. Since part of the influx of sunlight is absorbed in the atmosphere, the spectral distribution depends on the molecular composition of the atmosphere and the angle of incidence of the sunlight. It will be seen from the spectral distribution that the camera has a good response at 930 nanometres. A relatively great part of the sunlight is absorbed in the atmosphere at precisely this wavelength. Thus, the use of a light source 29 at 930 nanometres, i.e. in the IR range, provides a good signal to noise ratio between the energies of the light source and the sunlight, which means that the image data recording will be accurate.

When arranging the illumination as shown in figs. 4-6, the following advantages are obtained:
a) all shadows are behind the objects, thereby ruling out any need for shadow elimination,
b) since the IR light source cannot be seen, a rather strong light source may be used, and when suitably positioned and pulsed, it will involve no discomfort.

Although, generally, the invention has been explained in connection with a scene including fixed and moving objects, the invented system may be used in many specific connections.

By way of example, it may be used for the surveillance of business premises, such as banks, department stores, etc., where objects are to be protected, since the system can rapidly capture e.g. a person who is present in the business premises. The system may also be used for control and surveillance in connection with weapon systems.

Other examples of use may be:
Perimeter protection (surveillance of fences, doors, boundaries, etc.)
Teleconference system
Traffic control
Automatization of TV transmission recording systems
Training systems for e.g. teachers and athletes
Automatization of stage lighting
Surveillance of waters, harbours and the like.

Finally, it should be mentioned that although the invention has been explained especially in connection with special camera types, it is possible to use other detecting and control systems.

## Claims

1. A method in an image recording system for extracting detailed images of an arbitrary section of a scene, **characterized** in that
a) dynamic objects in the scene are determined by means of three-dimensional measurements performed by comparing registered image pairs of at least two fixed sensors, and
b) that the dynamic objects are tracked by one or more movable units which are controlled on the basis of motion information of the fixed sensors.

2. A method according to claim 1, **characterized** in that several pairs of sensors are used to provide several image pairs for the determination of the three-dimensional information.

3. A method according to claims 1-2, **characterized** in that the sensors have partly overlapping fields of vision, and that the sensors have approximately parallel optical axes.

4. A method according to claim 1 or 2, **characterized** in that CCD arrays are used as sensors.

5. A method according to claims 1-3, **characterized** in that the movable unit is capable of panning, tilting, zooming and focusing.

6. A method according to claims 1-5, **characterized** in that the movable unit is a camera, a display or a projector, a microphone, a loudspeaker, a weapon or a combination of these.

7. A method according to any of the preceding claims, **characterized** in that, where several dynamic objects are present in the scene, a user-controlled control unit is provided, said control unit being adapted to select one of the dynamic objects to be tracked by the movable unit or units.

8. A method according to any of the preceding claims, **characterized** in that the scene is illuminated by a light source from a position adjacent the fixed sensors.

9. A method according to claim 8, **characterized** in that the light source is pulsed synchronously with the image recording/closing function of the fixed sensors.

10. A method according to claim 8 or 9, **characterized** in that an IR light source is used.

11. A method according to claims 8-9, **characterized** in that a high-pass filter or a band-pass filter is provided in the fixed optoelectronic sensor systems.

## Patentansprüche

1. Verfahren in einem Bildaufnahmesystem zum Extrahieren detallierter Bilder eines beliebigen Ausschnitts einer Szene, dadurch gekennzeichnet, daß
a) dynamische Objekte in der Szene mit Hilfe von dreidimensionalen Messungen bestimmt werden, die durchgeführt werden, indem aufgezeichnete Bildpaare von wenigstens zwei feststehenden Sensoren verglichen werden, und
b) daß eine oder mehrere bewegbare Einheiten, die aufgrund der Bewegungsinformation der festen Sensoren gesteuert werden, den dynamischen Objekten nachgeführt werden.

2. Verfahren nach Anspruch 1, dadurch gekennzeichnet, daß mehrere Paare von Sensoren verwendet werden, um mehrere Bildpaare für die Bestimmung der dreidimensionalen Information zu schaffen.

3. Verfahren nach Ansprüchen 1 bis 2, dadurch gekennzeichnet, daß die Sensoren teilweise überlapende Blickfelder haben und daß die Sensoren ungefähr parallele optische Achsen haben.

4. Verfahren nach Anspruch 1 oder 2, dadurch gekennzeichnet, daß CCD-Matritzen als Sensoren verwendet werden.

5. Verfahren nach den Ansprüchen 1 bis 3, dadurch gekennzeichnet, daß die bewegbare Einheit im Stande ist, zu schwenken, sich zu neigen, zu zoomen und zu fokussieren.

6. Verfahren nach den Ansprüchen 1 bis 5, dadurch gekennzeichnet, daß die bewegbare Einheit eine Kamera, eine Anzeige oder ein Projektor, ein Mikrofon, ein Lautsprecher, eine Waffe oder eine Kombination derselben ist.

7. Verfahren nach einem der vorangehenden Ansprüche, dadurch gekennzeichnet, daß, wenn mehrere dynamische Objekte in der Szene vorhanden sind, eine benutzergesteuerte Steuereinheit vorgesehen ist, welche Steuereinheit dazu ausgebildet ist, eines der dynamischen Objekte auszuwählen, dem die bewegbare Einheit oder Einheiten nachgeführt werden soll bzw. sollen.

8. Verfahren nach einem der vorangehenden Ansprüche, dadurch gekennzeichnet, daß die Szene durch einer Lichtquelle von einer den festen Sensoren benachbarten Stelle beleuchtet wird.

9. Verfahren nach Anspruch 8, dadurch gekennzeichnet, daß die Lichtquelle synchron mit der Bildaufzeichnungs/Verschlußfunktion der festen Sensoren gepulst ist.

10. Verfahren nach Anspruch 8 oder 9, dadurch gekennzeichnet, daß eine IR-Lichtquelle verwendet wird.

11. Verfahren nach den Ansprüchen 8 bis 9, dadurch gekennzeichnet, daß ein Hochpaßfilter oder ein Bandpaßfilter in den festen optoelektronischen Sensorsystemen vorgesehen ist.

## Revendications

1. Procédé dans un système d'enregistrement d'images pour l'extraction d'images détaillées d'une partie quelconque d'une scène, caractérisé en ce que
a) les objets dynamiques dans la scène sont déterminés au moyen de mesures tridimensionnelles exécutées par comparaison de couples d'images enregistrées d'au moins deux capteurs fixes, et
b) que les objets dynamiques sont suivis par une ou plusieurs unités mobiles qui sont commandées sur la base d'une information de déplacement des capteurs fixes.

2. Procédé selon la revendication 1, caractérisé en ce que plusieurs couples de capteurs sont utilisés pour fournir plusieurs couples d'images pour la détermination de l'information tridimensionnelle.

3. Procédé selon les revendications 1-2, caractérisé en ce que les capteurs possèdent des champs d'observation qui se chevauchent partiellement, et que les capteurs possèdent des axes optiques approximativement parallèles.

4. Procédé selon la revendication 1 ou 2, caractérisé en ce que des réseaux CCD sont utilisés comme capteurs.

5. Procédé selon les revendications 1-3, caractérisé en ce que l'unité mobile peut effectuer un panoramique, un mouvement de pivotement, une action de zoom et une mise au point.

6. Procédé selon les revendications 1-5, caractérisé en ce que l'unité mobile est un appareil de prise de vues, un dispositif d'affichage ou un projecteur, un microphone, un haut-parleur, une arme ou une combinaison de ces dispositifs.

7. Procédé selon l'une quelconque des revendications précédentes, caractérisé en ce que, lorsque plusieurs objets dynamiques sont présents dans la scène, il est prévu une unité de commande commandée par l'utilisateur, ladite unité de commande étant adaptée pour sélectionner l'un des objets dynamiques devant être suivis par la ou les unités mobiles.

8. Procédé selon l'une quelconque des revendications précédentes, caractérisé en ce que la scène est éclairée par une source de lumière à partir d'une position adjacente aux capteurs fixes.

9. Procédé selon la revendication 8, caractérisé en ce que la source de lumière est commandée de façon pulsée en synchronisme avec la fonction d'enregistrement d'image/de fermeture des capteurs fixes.

10. Procédé selon la revendication 8 ou 9, caractérisé en ce qu'on utilise une source de rayonnement infrarouge.

11. Procédé selon les revendications 8-9, caractérisé en ce qu'un filtre passe-haut ou un filtre passe-bande est prévu dans les systèmes de capteurs optoélectroniques fixes.
